(19) Europäisches Patentamt
European Patent Office
Office européen des brevets

(11) EP 0 888 055 B1

(12) **EUROPEAN PATENT SPECIFICATION**

(45) Date of publication and mention of the grant of the patent:
**30.08.2000 Bulletin 2000/35**

(21) Application number: **97908179.1**

(22) Date of filing: **05.03.1997**

(51) Int Cl.7: **A01N 43/54**

(86) International application number:
**PCT/EP97/01106**

(87) International publication number:
**WO 97/34484 (25.09.1997 Gazette 1997/41)**

# (54) HERBICIDAL COMPOSITION AND METHOD OF WEED CONTROL

HERBIZIDE ZUSAMMENSETZUNG UND DEREN VERWENDUNG ZUR UNKRAUTBEKÄMPFUNG

COMPOSITION HERBICIDE ET PROCEDE DE LUTTE CONTRE LES MAUVAISES HERBES

(84) Designated Contracting States:
**AT BE CH DE ES FR GB GR IT LI NL PT**

(30) Priority: **15.03.1996 CH 69196**

(43) Date of publication of application:
**07.01.1999 Bulletin 1999/01**

(73) Proprietors:
- **Novartis AG**
  **4058 Basel (CH)**
  Designated Contracting States:
  **BE CH DE ES FR GB GR IT LI NL PT**
- **Novartis-Erfindungen Verwaltungsgesellschaft m.b.H.**
  **1235 Wien (AT)**
  Designated Contracting States:
  **AT**

(72) Inventors:
- **HUDETZ, Manfred**
  **CH-4310 Rheinfelden (CH)**
- **NELGEN, Robert**
  **D-55270 Jugenheim (DE)**

(56) References cited:
**DE-A- 4 437 197** **US-A- 5 183 492**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 888 055 B1

## Description

The present invention relates to a novel herbicidal composition comprising a herbicidal active ingredient combination that is suitable for the selective control of weeds in crops of useful plants, such as cereals, maize, rice, sugar cane, plantation crops, cotton, potatoes and soybean crops.

The invention relates also to a method of controlling weeds in crops of useful plants and to the use of the novel composition for that purpose.

Herbicidal compositions that comprise the compound of formula A

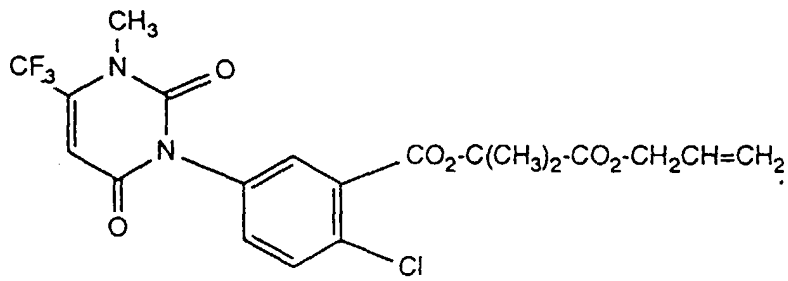

(A)

are described, for example, in US-A-5 183 492.

It has now surprisingly been shown that a combination of variable proportions of the compound of formula A with one compound selected from glyphosate, terbuthylazine, atrazine, metolachlor, metolachlor (S-enantiomer), dimethenamid, glufosinate and paraquat exhibits a herbicidal activity that renders possible effective control, both pre-emergence and post-emergence, of the majority of weeds that occur especially in crops of useful plants, without any significant damage being done to the useful plants.

In accordance with the present invention there is therefore proposed a novel herbicidal composition for selective weed control that comprises, in admixture with one another, the compound of formula A

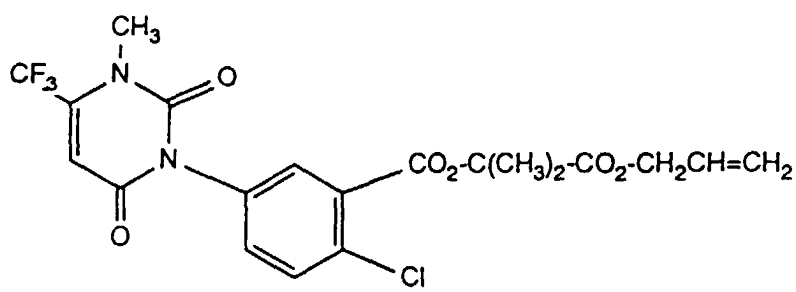

(A)

or an agrochemically acceptable salt thereof as active ingredient, and a synergistically effective amount of a compound selected from

glyphosate, terbuthylazine, atrazine, metolachlor, metolachlor (S-enantiomer), dimethenamid, glufosinate and paraquat.

It is extremely surprising that the combination of the compound of formula A with a synergistically effective amount of a compound selected from glyphosate, terbuthylazine, atrazine, metolachlor, metolachlor (S-enantiomer), dimethenamid, glufosinate and paraquat exceeds the additive effect on the weeds to be controlled that is to be expected in principle, and thus broadens the range of activity of the two preparations especially in the following two respects:

First, the rates of application of the individual compounds are reduced while the good action remains unchanged. Secondly, the composition according to the invention achieves a high degree of weed control even where the individual substances have become no longer usable agronomically at low rates of application. The result is a substantial broadening of the weed spectrum and an additional increase in selectivity for the crops of useful plants, which is desirable and necessary should an unintentional overdose of active ingredient be applied.

The herbicidal mixture according to the invention can be used against a large number of agronomically important weeds, such as Veronica, Galium, Papaver, Solanum, Chenopodium, Amaranthus, Xanthium, Abutilon, Ambrosia, Sagitaria, Setaria, Digitaria, Echinochloa, Ipomoea, Cassiastora, Datura stramonium, Sesbania exaltata and Sida spinosa in crops of useful plants. It has also been shown that after application of the compositions according to the invention the compound of formula A contained therein is broken down more rapidly in the useful plants treated,

especially maize, than metolachlor, which is an important advantage.

The compositions according to the invention are suitable for all methods of application customary in agriculture, such as pre-emergence application, post-emergence application and seed dressing.

The herbicidal mixture according to the invention is suitable especially for weed control in crops of useful plants such as cereals, sugar cane, plantation crops (TVM), rice, cotton, soybeans, potatoes and, especially, maize, and also for dessication (drying out) or defoliation, for example for the purpose of facilitating harvesting, for example in cotton and potato crops.

"Crops" is also to be understood as meaning crops that have been made tolerant to herbicides and classes of herbicides by conventional breeding or genetic engineering methods.

The active ingredient combination according to the invention comprises the compound of formula A and the compound selected from glyphosate, terbuthylazine, atrazine, metolachlor, metolachlor (S-enantiomer), dimethenamid, glufosinate and paraquat in a synergistically effective ratio, but usually with an excess of one component over the other(s). Preferred mixing ratios of the compound of formula A with its mixing partners are generally from 100 : 1 to 1 : 100.

The above-mentioned active ingredient combinations are suitable especially for use in maize.

The following active ingredient combinations may be used specifically for maize that is resistant to imidazolinone herbicides:

compound of formula A + glyphosate, compound of formula A + glufosinate.

Other active ingredient combinations according to the invention may be used, for example in potato and cotton crops, as dessicators or defoliants for the purpose of facilitating harvesting, for example compound of formula A + glufosinate or in no-till-maize and plantation crops (TVM), for example compound of formula A + glufosinate, compound of formula A + glyphosate, and compound of formula A + paraquat.

The above-mentioned active ingredients are described and characterised in "The Pesticide Manual", Tenth Edition, 1994, Crop Protection Publications, and other customary agronomical technical literature. The compound of formula A is described, for example, in US-A-5 183 492.

The optical isomer (S-enantiomer) of metolachlor suitable in accordance with the invention is aRS,1'S(-)-N-(1'-methyl-2'-methoxyethyl)-N-chloroacetyl-2-ethyl-6-methylaniline of formula Va

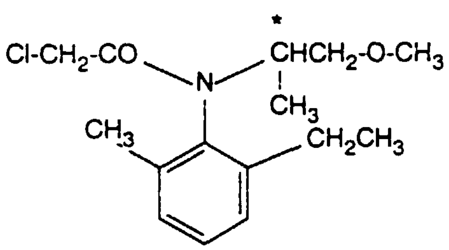

(Va)

and also its agrochemically acceptable salts, which are described, for example, in US-A-5 002 606.

The rate of application of the active ingredients may vary within wide limits and depends on the nature of the soil, the type of use (pre- or post-emergence; seed dressing; application to the seed furrow; no tillage application etc.), the crop plant, the weed to be controlled, the prevailing climatic conditions, and other factors determined by the type of use, time of use and target crop. Generally, the active ingredient mixture according to the invention can be applied at a rate of application of from 50 to 4000 g of active ingredient mixture/ha.

In the composition according to the invention, the component of formula A is present in a ratio by weight of from 1: 100 to 1 : 0.001 to a mixing partner selected from glyphosate, terbuthylazine, atrazine, metolachlor, metolachlor (S-enantiomer), dimethamid, glufosinate and paraquat.

The compositions according to the invention may be used in unmodified form, that is to say as obtained in the synthesis, but they are preferably formulated in customary manner together with the adjuvants customarily employed in formulation technology, e.g. into emulsifiable concentrates, provided sulfonylureas are not present, directly sprayable or dilutable solutions, dilute emulsions, wettable powders, soluble powders, dusts, granules or microcapsules. As with the nature of the compositions, the methods of application, such as spraying, atomising, dusting, wetting, scattering or pouring, are chosen in accordance with the intended objectives and the prevailing circumstances.

The formulations, that is to say the compositions, preparations or mixtures comprising the compounds (active ingredients) of formulae A the mixing partners and/or one or more solid or liquid formulation adjuvants, are prepared in a manner known *per se,* e.g. by homogeneously mixing and/or grinding the active ingredients with the formulation adjuvants, for example solvents or solid carriers. It is also possible in addition to use surface-active compounds (surfactants) in the preparation of the formulations.

Suitable solvents are: aromatic hydrocarbons, preferably the fractions containing 8 to 12 carbon atoms, such as mixtures of alkylbenzenes, for example xylene mixtures or alkylated naphthalenes; aliphatic and cycloaliphatic hydrocarbons, such as paraffins, cyclohexane or tetrahydronaphthalene; alcohols, such as ethanol, propanol or butanol; glycols and their ethers and esters, such as propylene glycol or dipropylene glycol ether; ketones, such as cyclohexanone, isophorone or diacetone alcohol; strongly polar solvents, such as N-methyl-2-pyrrolidone, dimethyl sulfoxide or water; vegetable oils and their esters, such as rape oil, castor oil or soybean oil; and where appropriate also silicone oils.

The solid carriers used e.g. for dusts and dispersible powders, are normally natural mineral fillers such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite; and suitable nonsorbent carriers are, for example, calcite or sand. In addition, a great number of pregranulated materials of inorganic or organic nature can be used, e.g. especially dolomite or pulverised plant residues.

Depending on the nature of the active ingredient to be formulated, suitable surface-active compounds are non-ionic, cationic and/or anionic surfactants having good emulsifying, dispersing and wetting properties. The term "surfactants" will also be understood as comprising mixtures of surfactants.

Both water-soluble soaps and water-soluble synthetic surface-active compounds are suitable anionic surfactants.

Suitable soaps are the alkali metal salts, alkaline earth metal salts or unsubstituted or substituted ammonium salts of higher fatty acids ($C_{10}$-$C_{22}$), e.g. the sodium or potassium salts of oleic or stearic acid, or of natural fatty acid mixtures which can be obtained e.g. from coconut oil or tallow oil. Mention may also be made of fatty acid methyltaurine salts.

More frequently, however, so-called synthetic surfactants are used, especially fatty alcohol sulfonates, fatty alcohol sulfates, sulfonated benzimidazole derivatives or alkylarylsulfonates.

The fatty alcohol sulfonates or sulfates are usually in the form of alkali metal salts, alkaline earth metal salts or unsubstituted or substituted ammonium salts and contain a $C_8$-$C_{22}$alkyl radical, the alkyl moiety of acyl radicals also being included, e.g. the sodium or calcium salt of lignosulfonic acid, of dodecylsulfate or of a mixture of fatty alcohol sulfates obtained from natural fatty acids. These compounds also comprise the salts of sulfated and sulfonated fatty alcohol/ethylene oxide adducts. The sulfonated benzimidazole derivatives preferably contain 2 sulfonic acid groups and one fatty acid radical containing 8 to 22 carbon atoms. Examples of alkylarylsulfonates are the sodium, calcium or triethanolamine salts of dodecylbenzenesulfonic acid, dibutylnaphthalenesulfonic acid, or of a condensate of naphthalenesulfonic acid and formaldehyde.

Also suitable are corresponding phosphates, e.g. salts of the phosphoric acid ester of an adduct of p-nonylphenol with 4 to 14 mol of ethylene oxide, or phospholipids.

Non-ionic surfactants are preferably polyglycol ether derivatives of aliphatic or cycloaliphatic alcohols, saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols.

Further suitable non-ionic surfactants are the water-soluble adducts of polyethylene oxide with polypropylene glycol, ethylenediaminopolypropylene glycol and alkylpolypropylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit.

Examples of non-ionic surfactants are nonylphenolpolyethoxyethanols, castor oil polyglycol ethers, polypropylene/polyethylene oxide adducts, tributylphenoxypolyethoxyethanol, polyethylene glycol and octylphenoxypolyethoxyethanol.

Fatty acid esters of polyoxyethylene sorbitan, e.g. polyoxyethylene sorbitan trioleate, are also suitable nonionic surfactants.

Cationic surfactants are preferably quaternary ammonium salts which contain, as N-substituent, at least one $C_8$-$C_{22}$alkyl radical and, as further substituents, unsubstituted or halogenated lower alkyl, benzyl or hydroxy-lower alkyl radicals. The salts are preferably in the form of halides, methyl sulfates or ethyl sulfates, e.g. stearyltrimethylammonium chloride or benzyldi(2-chloroethyl)ethylammonium bromide.

The surfactants customarily employed in formulation technology, which may also be used in the compositions according to the invention, are described *inter alia* in "McCutcheons's Detergents and Emulsifiers Annual", MC Publishing Corp., Ridgewood New Jersey, 1981, Stache, H., "Tensid-Taschenbuch", Carl Hanser Verlag, Munich/Vienna, 1981 and M. and J. Ash, "Encyclopedia of Surfactants", Vol I-III, Chemical Publishing Co., New York, 1980-1981.

The herbicidal formulations usually contain from 0.1 to 99 %, especially from 0.1 to 95 %, of an active ingredient mixture of the compound of formula A with the mixing partners, from 1 to 99 % of a solid or liquid adjuvant, and from 0 to 25 %, especially from 0.1 to 25 %, of a surfactant.

Whereas commercial products will preferably be formulated as concentrates, the end user will normally employ

dilute formulations.

The compositions may also comprise further auxiliaries, such as stabilisers, for example vegetable oils or epoxidised vegetable oils (epoxidised coconut oil, rape oil or soybean oil), antifoams, for example silicone oil, preservatives, viscosity regulators, binders and tackifiers, as well as fertilisers or other active ingredients.

Preferred formulations have especially the following compositions (throughout, percentages are by weight):

| Emulsifiable concentrates: | |
|---|---|
| active ingredient mixture | 1 to 90 %, preferably 5 to 20 % |
| surface-active agent | 1 to 30 %, preferably 10 to 20 % |
| liquid carrier | 5 to 94 %, preferably 70 to 85 % |

| Dusts: | |
|---|---|
| active ingredient mixture | 0.1 to 10 %, preferably 0.1 to 5 % |
| solid carrier | 99.9 to 90 %, preferably 99.9 to 99 % |

| Suspension concentrates: | |
|---|---|
| active ingredient mixture | 5 to 75 %, preferably 10 to 50 % |
| water | 94 to 24 %, preferably 88 to 30 % |
| surface-active agent | 1 to 40 %, preferably 2 to 30 % |

| Wettable powders: | |
|---|---|
| active ingredient mixture | 0.5 to 90 %, preferably 1 to 80 % |
| surface-active agent | 0.5 to 20 %, preferably 1 to 15 % |
| solid carrier | 5 to 95 %, preferably 15 to 90 % |

| Granules: | |
|---|---|
| active ingredient mixture | 0.1 to 30 %, preferably 0.1 to 15 % |
| solid carrier | 99.5 to 70 %, preferably 97 to 85 % |

The following Examples further illustrate, but do not limit, the invention.

Formulation Examples:

Mixtures of compounds of formulae A, and the mixing partners (throughout, percentages are by weight)

| F1. Emulsifiable concentrates | a) | b) | c) | d) |
|---|---|---|---|---|
| mixture of a compound of formula A with one of the mixing partners | 5 % | 10 % | 25 % | 50 % |
| calcium dodecylbenzenesulfonate | 6 % | 8 % | 6 % | 8 % |
| castor oil polyglycol ether (36 mol of ethylene oxide) | 4 % | - | 4 % | 4 % |
| octylphenol polyglycol ether (7-8 mol of ethylene oxide) | - | 4 % | - | 2 % |
| cyclohexanone | - | - | 10 % | 20 % |
| aromatic hydrocarbon mixture $C_9$-$C_{12}$ | 85 % | 78 % | 55 % | 16 % |

Emulsions of any desired concentration can be obtained from such concentrates by dilution with water.

| F2. Solutions | a) | b) | c) | d) |
|---|---|---|---|---|
| mixture of a compound of formula A with one of the mixing partners | 5 % | 10 % | 50 % | 90 % |

(continued)

| F2. Solutions | a) | b) | c) | d) |
|---|---|---|---|---|
| 1-methoxy-3-(3-methoxypropoxy)-propane | - | 20 % | 20 % | - |
| polyethylene glycol MW 400 | 20 % | 10 % | - | - |
| N-methyl-2-pyrrolidone | - | - | 30 % | 10 % |
| aromatic hydrocarbon mixture $C_9$-$C_{12}$ | 75 % | 60 % | - | - |

These solutions are suitable for application in the form of microdrops.

| F3. Wettable powders | a) | b) | c) | d) |
|---|---|---|---|---|
| mixture of a compound of formula A with one of the mixing partners | 5 % | 25 % | 50 % | 80 % |
| sodium lignosulfonate | 4 % | - | 3 % | - |
| sodium lauryl sulfate | 2 % | 3 % | - | 4 % |
| sodium diisobutylnaphthalene sulfonate | - | 6 % | 5 % | 6 % |
| octylphenol polyglycol ether (7-8 mol of ethylene oxide) | - | 1 % | 2 % | - |
| highly dispersed silicic acid | 1 % | 3 % | 5 % | 10 % |
| kaolin | 88 % | 62 % | 35 % | - |

The active ingredient is thoroughly mixed with the additives and the mixture is thoroughly ground in a suitable mill, affording wettable powders which can be diluted with water to give suspensions of any desired concentration.

| F4. Coated granules | a) | b) | c ) |
|---|---|---|---|
| mixture of a compound of formula A with one of the mixing partners | 0.1 % | 5 % | 15 % |
| highly dispersed silicic acid | 0.9 % | 2 % | 2 % |
| inorganic carrier (diameter 0.1 - 1 mm) | 99.0 % | 93 % | 83 % |
| for example $CaCO_3$ or $SiO_2$ | | | |

The active ingredient is dissolved in methylene chloride and the solution is sprayed onto the carrier, and the solvent is subsequently evaporated off *in vacuo.*

| F5. Coated granules | a) | b) | c ) |
|---|---|---|---|
| mixture of a compound of formula A with one of the mixing partners | 0.1 % | 5 % | 15 % |
| polyethylene glycol MW 200 | 1. 0 % | 2 % | 3 % |
| highly dispersed silicic acid | 0 . 9 % | 1 % | 2 % |
| inorganic carrier (diameter 0.1 - 1 mm) | 98.0 % | 92 % | 80 % |
| for example $CaCO_3$ or $SiO_2$ | | | |

The finely ground active ingredient is uniformly applied, in a mixer, to the carrier moistened with polyethylene glycol. Non-dusty coated granules are obtained in this manner.

| F6. Extruder granules | a ) | b ) | c ) | d ) |
|---|---|---|---|---|
| mixture of a compound of formula A with one of the mixing partners | 0.1 % | 3 % | 5% | 15 % |
| sodium lignosulfonate | 1.5 % | 2 % | 3 % | 4 % |
| carboxymethylcellulose | 1.4 % | 2 % | 2 % | 2 % |
| kaolin | 97.0 % | 93 % | 90 % | 79 % |

The active ingredient is mixed and ground with the adjuvants, and the mixture is moistened with water. The mixture is extruded and then dried in a stream of air.

| F7. Dusts | a) | b) | c ) |
|---|---|---|---|
| mixture of a compound of formula A with one of the mixing partners | 0.1 % | 1% | 5 % |
| talcum | 39.9 % | 49 % | 35 % |
| kaolin | 60.0 % | 50 % | 60 % |

Ready-for-use dusts are obtained by mixing the active ingredient with the carriers, and grinding the mixture in a suitable mill.

| F8. Suspension concentrates | a) | b ) | c) | d) |
|---|---|---|---|---|
| mixture of a compound of formula A with one of the mixing partners | 3 % | 10 % | 25 % | 50 % |
| ethylene glycol | 5 % | 5 % | 5 % | 5 % |
| nonylphenol polyglycol ether (15 mol of ethylene oxide) | - | 1 % | 2 % | - |
| sodium lignosulfonate | 3 % | 3 % | 4 % | 5 % |
| carboxymethylcellulose | 1 % | 1 % | 1 % | 1 % |
| 37% aqueous formaldehyde solution | 0.2 % | 0.2 % | 0.2 % | 0.2 % |
| silicone oil emulsion | 0.8 % | 0.8 % | 0.8 % | 0.8 % |
| water | 87 % | 79 % | 62 % | 38 % |

The finely ground active ingredient is intimately mixed with the adjuvants, giving a suspension concentrate from which suspensions of any desired concentration can be obtained by dilution with water.

It is often more practical for the compound of formula A and the mixing partner or mixing partners to be formulated individually and to be brought together in the applicator in the desired mixing ratio, in the form of a "tank mixture" in water, only shortly before application.

It may also prove advantageous to apply the compound of formula A, if appropriate in combination with a safener, at a different time from one or more of the mixing partners. Also possible is application of the compound of formula A at a different time from one or more of the compounds of formulae I to VII that, if appropriate, is/are in combination with the safener.

Biological Examples:

A synergistic effect exists whenever the action of the active ingredient combination of the compound of formula A and the mixing partners is greater than the sum of the actions of the compounds when applied individually.

The expected herbicidal action E for a given combination of two herbicides can be calculated as follows (see COLBY, S.R., "Calculating synergistic and antagonistic response of herbicide combinations", Weeds 15, pages 20-22, 1967):

$$E = X + \frac{Y \cdot (100 - X)}{100}$$

In the above formula:

X = percentage growth inhibition in the case of treatment with the compound of formula A at a rate of application of p kg per hectare compared with the untreated control (= 0 %).

Y = percentage herbicidal action in the case of treatment with one of the mixing partners at a rate of application of q kg per hectare compared with the untreated control.

E = Expected herbicidal action (percentage herbicidal action compared with the untreated control) after treatment with the compounds of formulae A and the mixing partners at a rate of application of p + q kg of active ingredient per hectare.

If the action actually observed is greater than the expected action E, then there is synergism. Increases in the action of herbicide combinations from 0-50 % herbicidal action (expected value) to 70-100 % herbicidal action (observed), and from 90-95 % herbicidal action (expected value) to 95-100% herbicidal action (observed) are recognised by the person skilled in the art as being synergistic increases.

The synergistic effect of the combinations of the compound of formula A with one of the mixing partners is demonstrated in the following Examples.

The results, together with the expected values E calculated according to the Colby formula are entered in Tables B1 to B6. Each of the active ingredients used and their rates of application [g active ingredient/ha], and also the weeds and useful plants tested, are indicated.

Example B1: Post-emergence test:

The test plant seeds are grown to the 4- to 6-leaf stage under greenhouse conditions in plastics pots. The culture substrate used is a standard soil. At the 4- to 6-leaf stage the herbicides are applied separately and in admixture to the test plants. The test compounds are applied in the form of an aqueous suspension (Formulation Example F8, c)) in 500 l of water/ha. The rates of application conform to the optimum concentrations ascertained under field conditions and greenhouse conditions. Evaluation of the tests is carried out after 24 days. The following linear scale is used as a measure (% action):

100 % = plants have died
50 % = moderate action
0 % = no phytotoxic action (as untreated control).

Test plants: brachiaria, cyperus, digitaria, echinochloa, panicum.

Examples of the synergistic activity of the combinations of the compound of formula A with glyphosate are given in Table B1.

Table B1:

| Tests with compound of formula A and glyphosate Gly separately and in admixture, post-emergence, on 5 weeds. Herbicidal activity in [%] 24 days after application. | | | |
|---|---|---|---|
| Compound | Rate of application [g active ingredient/ha] | Weed: [%] | E [Expected value] |
| Brachiaria | | | |
| A | 100 | 10 | |
| Gly | 400 | 70 | |
| A + Gly | 100 + 400 | 90 | 73 |
| A | 100 | 10 | |
| Gly | 300 | 70 | |
| A + Gly | 100 + 300 | 90 | 73 |
| A | 200 | 15 | |
| Gly | 200 | 60 | |
| A + Gly | 200 + 200 | 80 | 66 |
| Cyperus | | | |
| A | 100 | 60 | |
| Gly | 400 | 15 | |
| A + Gly | 100 + 400 | 95 | 66 |
| A | 50 | 50 | |
| Gly | 400 | 15 | |
| A + Gly | 50 + 400 | 90 | 58 |
| A | 50 | 50 | |
| Gly | 300 | 5 | |
| A + Gly | 50 + 300 | 90 | 53 |

Table B1: (continued)

| Tests with compound of formula A and glyphosate Gly separately and in admixture, post-emergence, on 5 weeds. Herbicidal activity in [%] 24 days after application. | | | |
|---|---|---|---|
| Compound | Rate of application [g active ingredient/ha] | Weed: [%] | E [Expected value] |
| Digitaria | | | |
| A | 200 | 90 | |
| Gly | 100 | 25 | |
| A + Gly | 200 + 100 | 98 | 93 |
| A | 100 | 90 | |
| Gly | 100 | 25 | |
| A + Gly | 100 + 100 | 98 | 93 |
| A | 50 | 85 | |
| Gly | 100 | 25 | |
| A + Gly | 50 + 100 | 95 | 88 |
| Echinochloa | | | |
| A | 200 | 45 | |
| Gly | 400 | 20 | |
| A + Gly | 200 + 400 | 90 | 56 |
| A | 200 | 45 | |
| Gly | 200 | 0 | |
| A + Gly | 200 + 200 | 80 | 45 |
| A | 100 | 15 | |
| Gly | 400 | 20 | |
| A + Gly | 100 + 400 | 75 | 32 |
| Panicum | | | |
| A | 200 | 70 | |
| Gly | 100 ' | 70 | |
| A + Gly | 200 + 100 | 98 | 91 |
| A | 50 | 50 | |
| Gly | 100 | 70 | |
| A + Gly | 50 + 100 | 90 | 85 |

The same results are obtained when the test compounds of formulae A and Gly are formulated in accordance with Examples F1 to F7.

Example B2: Pre-emergence test:

The test plants are sown in plastics pots in standard soil. Directly after sowing the test compounds are applied by spraying, separately or in admixture, in the form of an aqueous suspension of the test compounds (Formulation Example F8, c) and d)) or in the form of an emulsion concentrate (Formulation Example F1, d)) in 500 l of water/ha. The rates of application conform to the optimum concentrations ascertained under field conditions and greenhouse conditions. The test plants are then cultivated in the greenhouse under optimum conditions. After 34 days' (Tables B2 to B5) and 41 days' (Table B6) test duration, the test is evaluated (% action, 100 % = plants have died, 0 % = no phytotoxic action). From 61 to 80 % (especially from 81 to 100 %) phytotoxicity indicates good to very good herbicidal action in weeds; from 0 to 15 % (especially from 0 to 5 %) phytotoxicity indicates good to very good tolerance in useful

plants.

Test plants: abutilon, bidens, euphorbia, ipomoea, sesbamia, xanthium, rottboellia, sida, Sorghum bicolor.

Examples of the synergistic activity of the combinations of the compound of formula A with terbuthylazine, atrazine, metolachlor racemate, metolachlor S-enantiomer and dimethenamid are given in Tables B2 to B6.

Table B2:

| Tests on maize with compound of formula A and terbuthylazine Terb, separately and in admixture, pre-emergence on maize and 5 weeds. Herbicidal activity in [%] 34 days after application. E = expected value. | | | | |
|---|---|---|---|---|
| Compound | Rate of application [g active ingredient/ha] | Useful plant: [%] | Weed: [%] | E |
| | | Maize | Abutilon | |
| A | 30 | 10 | 40 | |
| Terb | 500 | 0 | 90 | |
| A + Terb | 30 + 500 | 15 | 100 | 94 |
| A | 15 | 0 | 20 | |
| Terb | 500 | 0 | 90 | |
| A + Terb | 15 + 500 | 10 | 100 | 92 |
| A | 15 | 0 | 20 | |
| Terb | 250 | 0 | 30 | |
| A + Terb | 15 + 250 | 5 | 98 | 44 |
| | | Maize | Bidens | |
| A | 60 | 10 | 90 | |
| Terb | 125 | 0 | 0 | |
| A + Terb | 60 + 125 | 0 | 100 | 90 |
| A | 30 | 10 | 30 | |
| Terb | 250 | 0 | 60 | |
| A + Terb | 30 + 250 | 10 | 90 | 72 |
| A | 30 | 10 | 30 | |
| Terb | 125 | 0 | 0 | |
| A + Terb | 30 + 125 | 0 | 95 | 30 |
| | | Maize | Euphorbia | |
| A | 30 | 10 | 90 | |
| Terb | 125 | 0 | 40 | |
| A + Terb | 30 + 125 | 0 | 100 | 94 |
| A | 15 | 0 | 0 | |
| Terb | 500 | 0 | 95 | |
| A + Terb | 15 + 500 | 10 | 100 | 95 |
| A | 15 | 0 | 0 | |
| Terb | 250 | 0 | 70 | |
| A + Terb | 15 + 250 | 5 | 80 | 70 |
| | | Maize | Ipomoea | |
| A | 60 | 10 | 30 | |
| Terb | 125 | 0 | 0 | |
| A + Terb | 60 + 125 | 0 | 50 | 30 |

Table B2: (continued)

| Tests on maize with compound of formula A and terbuthylazine Terb, separately and in admixture, pre-emergence on maize and 5 weeds. Herbicidal activity in [%] 34 days after application. E = expected value. | | | | |
|---|---|---|---|---|
| Compound | Rate of application [g active ingredient/ha] | Useful plant: [%] | Weed: [%] | E |
| | | Maize | Ipomoea | |
| A | 30 | 10 | 20 | |
| Terb | 500 | 0 | 95 | |
| A + Terb | 30 + 500 | 15 | 100 | 96 |
| | | Maize | Sesbania | |
| A | 60 | 10 | 50 | |
| Terb | 250 | 0 | 80 | |
| A + Terb | 60 + 250 | 10 | 100 | 90 |

Table B3:

| Tests on maize with compound of formula A and atrazine Atra, separately and in admixture, pre-emergence on maize and 5 weeds. Herbicidal activity in [%] 34 days after application. E = expected value. | | | | |
|---|---|---|---|---|
| Compound | Rate of application [g active ingredient/ha] | Useful plant: [%] | Weed: [%] | E |
| | | Maize | Abutilon | |
| A | 30 | 10 | 40 | |
| Atra | 125 | 0 | 0 | |
| A + Atra | 30 + 125 | 0 | 90 | 40 |
| A | 15 | 0 | 20 | |
| Atra | 500 | 0 | 98 | |
| A + Atra | 15 + 500 | 0 | 100 | 98 |
| | | Maize | Bidens | |
| A | 60 | 10 | 90 | |
| Atra | 125 | 0 | 60 | |
| A + Atra | 60 + 125 | 10 | 100 | 96 |
| A | 30 | 10 | 30 | |
| Atra | 125 | 0 | 60 | |
| A + Atra | 30 + 125 | 0 | 100 | 72 |
| A | 15 | 0 | 20 | |
| Atra | 125 | 0 | 60 | |
| A + Atra | 15 + 125 | 0 | 98 | 68 |
| | | Maize | Euphorbia | |
| A | 30 | 10 | 90 | |
| Atra | 125 | 0 | 0 | |
| A + Atra | 30 + 125 | 0 | 100 | 90 |
| | | Maize | Ipomoea | |
| A | 60 | 10 | 30 | |
| Atra | 250 | 0 | 70 | |

Table B3: (continued)

| Tests on maize with compound of formula A and atrazine Atra, separately and in admixture, pre-emergence on maize and 5 weeds. Herbicidal activity in [%] 34 days after application. E = expected value. | | | | |
|---|---|---|---|---|
| Compound | Rate of application [g active ingredient/ha] | Useful plant: [%] | Weed: [%] | E |
| | | Maize | Ipomoea | |
| A + Atra | 60 + 250 | 10 | 100 | 79 |
| A | 60 | 10 | 30 | |
| Atra | 125 | 0 | 0 | |
| A + Atra | 60 + 125 | 10 | 60 | 30 |
| | | Maize | Xanthium | |
| A | 30 | 10 | 0 | |
| Atra | 250 | 0 | 0 | |
| A + Atra | 30 + 250 | 0 | 70 | 0 |
| A | 15 | 0 | 0 | |
| Atra | 500 | 0 | 95 | |
| A + Atra | 15 + 500 | 0 | 100 | 95 |

Table B4:

| Tests on maize with compound of formula A and metolachlor racemic Met. rac., separately and in admixture, pre-emergence on maize and 7 weeds. Herbicidal activity in [%] 34 days after application. E = expected value. | | | | |
|---|---|---|---|---|
| Compound | Rate of application [g active ingredient/ha] | Useful plant: [%] | Weed: [%] | E |
| | | Maize | Abutilon | |
| A | 30 | 10 | 40 | |
| Met.rac. | 1000 | 0 | 20 | |
| A + Met.rac. | 30 + 1000 | 0 | 98 | 52 |
| A | 30 | 10 | 40 | |
| MeLrac. | 500 | 0 | 20 | |
| A + Met.rac. | 30 + 500 | 0 | 100 | 52 |
| | | Maize | Bidens | |
| A | 30 | 10 | 30 | |
| Met.rac. | 1000 | 0 | 30 | |
| A + Met.rac. | 30 + 1000 | 0 | 90 | 51 |
| | | Maize | Euphorbia | |
| A | 30 | 10 | 90 | |
| MeLrac. | 500 | 0 | 0 | |
| A + Met.rac. | 30 + 500 | 0 | 95 | 90 |
| A | 15 | 0 | 0 | |
| Met.rac. | 500 | 0 | 0 | |
| A + Met.rac. | 15 + 500 | 0 | 90 | 0 |
| | | Maize | Ipomoea | |
| A | 60 | 10 | 30 | |

Table B4: (continued)

| Tests on maize with compound of formula A and metolachlor racemic Met. rac., separately and in admixture, pre-emergence on maize and 7 weeds. Herbicidal activity in [%] 34 days after application. E = expected value. | | | | |
|---|---|---|---|---|
| Compound | Rate of application [g active ingredient/ha] | Useful plant: [%] | Weed: [%] | E |
| | | Maize | Ipomoea | |
| Met.rac.<br>A + Met.rac. | 1000<br>60 + 1000 | 0<br>0 | 0<br>60 | <br>30 |
| | | Maize | Rottboellia | |
| A<br>MeLrac.<br>A + MeLrac. | 60<br>1000<br>60 + 1000 | 10<br>0<br>0 | 30<br>0<br>80 | <br><br>30 |
| | | Maize | Sesbania | |
| A<br>MeLrac.<br>A + Met.rac. | 60<br>1000<br>60 + 1000 | 10<br>0<br>0 | 50<br>60<br>100 | <br><br>70 |
| | | Maize | Sida | |
| A<br>Met.rac.<br>A + Met.rac.<br><br>A<br>MeLrac.<br>A + Met.rac. | 15<br>500<br>15 + 500<br><br>15<br>250<br>15 + 250 | 0<br>0<br>0<br><br>0<br>0<br>0 | 80<br>50<br>95<br><br>80<br>0<br>100 | <br><br>90<br><br><br><br>80 |

Table B5:

| Tests on maize with compound of formula A and metolachlor S-enantiomer Met-S, separately and in admixture, pre-emergence on maize and 6 weeds. Herbicidal activity in [%] 34 days after application. E = expected value. | | | | |
|---|---|---|---|---|
| Compound | Rate of application [g active ingredient/ha] | Useful plant: [%] | Weed: [%] | E |
| | | Maize | Abutilon | |
| A<br>Met-S<br>A + Met-S<br><br>A<br>Met-S<br>A + Met-S | 30<br>300<br>30 + 300<br><br>30<br>150<br>30 + 150 | 10<br>10<br>5<br><br>10<br>0<br>0 | 40<br>10<br>100<br><br>40<br>0<br>100 | <br><br>46<br><br><br><br>40 |
| | | Maize | Brachiaria | |
| A<br>Met-S<br>A + Met-S<br><br>A<br>Met-S<br>A + Met-S | 60<br>300<br>60 + 300<br><br>60<br>150<br>60 + 150 | 10<br>10<br>10<br><br>10<br>0<br>0 | 60<br>50<br>100<br><br>60<br>20<br>75 | <br><br>80<br><br><br><br>68 |

Table B5: (continued)

| Tests on maize with compound of formula A and metolachlor S-enantiomer Met-S, separately and in admixture, pre-emergence on maize and 6 weeds. Herbicidal activity in [%] 34 days after application. E = expected value. | | | | |
|---|---|---|---|---|
| Compound | Rate of application [g active ingredient/ha] | Useful plant: [%] | Weed: [%] | E |
| | | Maize | Euphorbia | |
| A | 30 | 10 | 90 | |
| Met-S | 600 | 10 | 0 | |
| A + Met-S | 30 + 600 | 15 | 95 | 90 |
| A | 15 | 0 | 0 | |
| Met-S | 300 | 10 | 0 | |
| A + Met-S | 15 + 300 | 5 | 70 | 0 |
| A | 15 | 0 | 0 | |
| Met-S | 150 | 0 | 0 | |
| A + Met-S | 15 + 150 | 0 | 70 | 0 |
| | | Maize | Sida | |
| A | 15 | 0 | 80 | |
| Met-S | 300 | 10 | 40 | |
| A + Met-S | 15 + 300 | 5 | 100 | 88 |
| A | 15 | 0 | 80 | |
| Met-S | 150 | 0 | 0 | |
| A + Met-S | 15 + 150 | 0 | 100 | 80 |
| | | Maize | Xanthium | |
| A | 60 | 10 | 20 | |
| Met-S | 600 | 10 | 20 | |
| A + Met-S | 60 + 600 | 10 | 80 | 36 |
| A | 60 | 10 | 20 | |
| Met-S | 300 | 10 | 0 | |
| A + Met-S | 60 + 300 | 10 | 60 | 20 |

Table B6:

| Table B6: Tests on maize with compound of formula A and dimethenamid Dime, separately and in admixture, pre-emergence on maize and 6 weeds. Herbicidal activity in [%] 41 days after application. E = expected value. | | | | |
|---|---|---|---|---|
| Compound | Rate of application [g active ingredient/ha] | Useful plant: [%] | Weed: [%] | E |
| | | Maize | Abutilon | |
| A | 15 | 0 | 80 | |
| Dime | 250 | 0 | 10 | |
| A + Dime | 15 + 250 | 0 | 100 | 82 |
| A | 8 | 0 | 50 | |
| Dime | 250 | 0 | 10 | |
| A + Dime | 8 + 250 | 0 | 70 . | 55 |

Table B6: (continued)

| Table B6: Tests on maize with compound of formula A and dimethenamid Dime, separately and in admixture, pre-emergence on maize and 6 weeds. Herbicidal activity in [%] 41 days after application. E = expected value. | | | | |
|---|---|---|---|---|
| Compound | Rate of application [g active ingredient/ha] | Useful plant: [%] | Weed: [%] | E |
| | | Maize | Euphorbia | |
| A | 15 | 0 | 85 | |
| Dime | 500 | 0 | 30 | |
| A + Dime | 15 + 500 | 0 | 100 | 90 |
| | | Maize | Ipomoea | |
| A | 30 | 10 | 0 | |
| Dime | 1000 | 20 | 0 | |
| A + Dime | 30 + 1000 | 20 | 70 | 0 |
| | | Maize | Rottboellia | |
| A | 60 | 40 | 70 | |
| Dime | 125 | 0 | 20 | |
| A + Dime | 60 + 125 | 15 | 100 | 76 |
| A | 30 | 40 | 80 | |
| Dime | 125 | 0 | 20 | |
| A + Dime | 30 + 125 | 10 | 100 | 84 |
| | | Maize | Sida | |
| A | 8 | 0 | 40 | |
| Dime | 1000 | 20 | 95 | |
| A + Dime | 8 + 1000 | 0 | 100 | 97 |
| A | 8 | 0 | 40 | |
| Dime | 500 | 0 | 85 | |
| A + Dime | 8 + 500 | 0 | 100 | 91 |
| A | 8 | 0 | 40 | |
| Dime | 250 | 0 | 40 | |
| A + Dime | 8 + 250 | 0 | 100 | 64 |
| | | Maize | Sorghum bic. | |
| A | 8 | 0 | 0 | |
| Dime | 1000 | 20 | 80 | |
| A + Dime | 8 + 1000 | 0 | 100 | 80 |

The same results are obtained when the test compounds of formulae A and the mixing partners are formulated in accordance with Examples F2 to F7.

The compositions according to the invention demonstrate pronounced synergistic effects, both post- and pre-emergence, in various mixing ratios of the individual components and at various rates of application of the mixtures on different weeds (monocotyledons and dicotyledons).

Synergistic increases in activity in the upper spectrum of herbicidal activity are especially valuable from an economic standpoint when, for example, an expected herbicidal value (E) of 90-95 % can be increased to an observed herbicidal action of 95-100 %, as can be obtained, for example, in euphorbia in Table B6 with compound of formula A and dimethenamid Dime in a mixture of 15 + 500 g of active ingredient/ha.

## Claims

1. A herbicidal composition that comprises, in admixture with one another, a compound of formula A

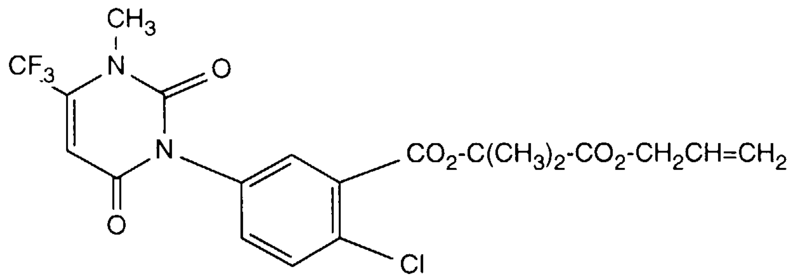 (A)

or an agrochemically acceptable salt thereof and a synergistically effective amount of a compound selected from glyphosate, terbuthylazine, atrazine, metolachlor, metolachlor (S-enantiomer), dimethenamid, glufosinate and paraquat.

2. A composition according to claim 1 that comprises the compound of formula A in a ratio by weight of from 1:100 to 1:0.001 with respect to the compounds selected from glyphosate, terbuthylazine, atrazine, metolachlor, metolachlor (S-enantiomer), dimethenamid, glufosinate and paraquat.

3. A method of controlling undesired plant growth in crops of useful plants that comprises allowing a herbicidally effective amount of a composition according to claim 1 to act on the crop plant or the locus thereof.

4. A method according to claim 3 that comprises allowing the compound of formula A to act on the crop plant or the locus thereof at a different time from the compounds selected from glyphosate, terbuthylazine, atrazine, metolachlor, metolachlor (S-enantiomer), dimethenamid, glufosinate and paraquat.

5. A method according to claim 4 wherein the crop plants are plantation crops, sugarcane, cotton, potatoes, cereals and, especially, maize.

6. A method according to claim 4, wherein the crops of useful plants are treated with the said composition at rates of application that correspond to a total amount of active ingredient of from 0.5 to 4.0 kg per hectare.

## Patentansprüche

1. Herbizides Mittel, enthaltend in Mischung eine Verbindung der Formel A

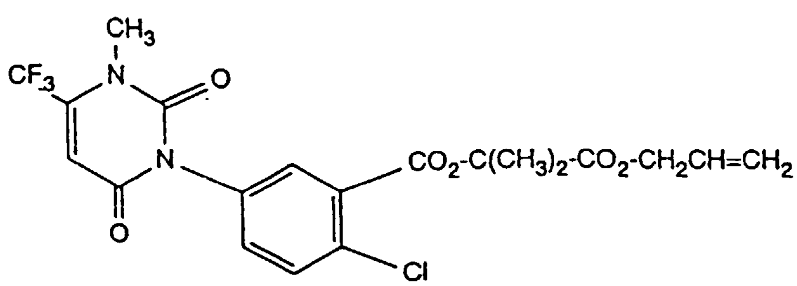 (A)

oder ein agrochemisches Salz davon und eine synergistisch wirksame Menge einer Verbindung, die unter Glyphosat, Terbuthylazin, Atrazin, Metolachlor, Metolachlor (S-Enantiomeres), Dimethenamid, Glufosinat und Paraquat ausgewählt ist.

2. Mittel nach Anspruch 1, enthaltend die Verbindung der Formel A in einem Gewichtsverhältnis von 1:100 bis 1: 0,001, bezogen auf die unter Glyphosat, Terbuthylazin, Atrazin, Metolachlor, Metolachlor (S-Enantiomeres), Dimethenamid, Glufosinat und Paraquat ausgewählten Verbindungen.

**3.** Verfahren zur Bekämpfung von unerwünschtem Pflanzenwuchs in Nutzpflanzenkulturen, wobei man eine herbizid wirksame Menge eines Mittels nach Anspruch 1 auf die Kulturpflanze oder deren Lebensraum einwirken lässt.

**4.** Verfahren nach Anspruch 3, wobei man die Verbindung der Formel A zeitlich getrennt von den unter Glyphosat, Terbuthylazin, Atrazin, Metolachlor, Metolachlor (S-Enantiomeres), Dimethenamid, Glufosinat und Paraquat ausgewählten Verbindungen auf die Kulturpflanze oder deren Lebensraum einwirken lässt.

**5.** Verfahren nach Anspruch 4, wobei es sich bei den Kulturpflanzen um Plantagen, Zuckerrohr, Baumwolle, Kartoffel, Getreide und insbesondere Mais handelt.

**6.** Verfahren nach Anspruch 4, wobei die Nutzpflanzenkulturen mit dem genannten Mittel in Aufwandmengen, die 0,5 bis 4,0 g Wirkstoffgesamtmenge pro Hektar entsprechen, behandelt werden.

**Revendications**

**1.** Une composition herbicide qui comprend, en mélange l'un avec l'autre, un composé de formule A

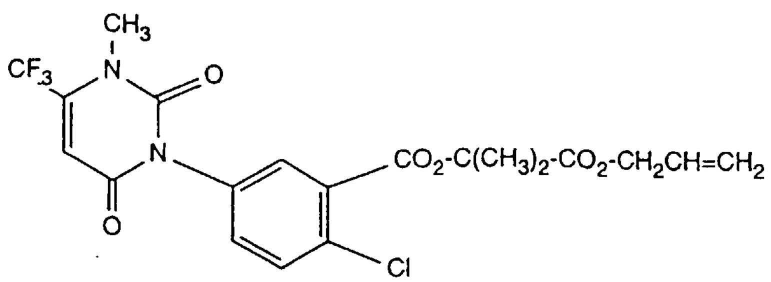

(A)

ou un de ses sels agrochimiquement acceptable et une quantité efficace du point de vue synergique d'un composé choisi parmi
le glyphosate, la terbuthylazine, l'atrazine, le métolachlor, le métolachlor (énantiomère S), le diméthenamide, le glufosinate et le paraquat.

**2.** Une composition selon la revendication 1, qui comprend le composé de formule A dans un rapport pondéral compris entre 1:100 et 1:0,001 par rapport aux composés choisis parmi le glyphosate, la terbuthylazine, l'atrazine, le métolachlor, le métolachlor (énantiomère S), le diméthenamide, le glufosinate et le paraquat.

**3.** Une méthode de lutte contre la croissance des plantes indésirées dans les cultures de plantes utiles selon laquelle on laisse agir une quantité efficace du point de vue herbicide d'une composition selon la revendication 1 sur la plante à cultiver ou sur sa zone de croissance.

**4.** Une méthode selon la revendication 3, selon laquelle on laisse agir le composé de formule A sur la plante à cultiver ou sur sa zone de croissance à un temps différent des composés choisis parmi le glyphosate, la terbuthylazine, l'atrazine, le métolachlor, le métolachlor (énantiomère S), le diméthenamide, le glufosinate et le paraquat.

**5.** Une méthode selon la revendication 4, dans laquelle les plantes à cultiver sont des plantations de cultures de canne à sucre, de coton, de pommes de terre, de céréales et spécialement de maïs.

**6.** Une méthode selon la revendication 4, dans laquelle les cultures de plantes utiles sont traitées avec ladite composition à des doses d'application qui correspondent à une quantité totale de matière active de 0,5 à 4,0 kg par hectare.